# EUROPEAN PATENT SPECIFICATION

(11) **EP 4 321 812 B1**
(45) Date of publication and mention of the grant of the patent: **11.11.2026**
(21) Application number: 22784717.5
(22) Date of filing: 07.04.2022
(51) Int. Cl.: F24F 11/46, F24F 11/80, F24F 11/88, F24F 140/60, F24D 19/10, F24F 11/77

(54) **AIR CONDITIONER**
KLIMAANLAGE
CLIMATISEUR

(30) Priority: 08.04.2021 JP 2021065566
(43) Date of publication of application: 14.02.2024
(73) Proprietor: Panasonic Intellectual Property Management Co., Ltd., Kadoma-shi, Osaka 571-0057 (JP)
(72) Inventor: FUKUE, Takashi, Kadoma-shi, Osaka 571-0057 (JP); YOSHIDA, Izumi, Kadoma-shi, Osaka 571-0057 (JP)
(74) Representative: Eisenführ Speiser
(86) International application number: PCT/JP2022/017296
(87) International publication number: WO 2022/215735

(56) References cited:
- CA-A1- 2 722 746
- CA-C- 2 722 515
- JP-B2- 4 255 858
- JP-U- H04 120 553
- US-A1- 2009 113 908

## Description

### TECHNICAL FIELD

The present invention relates to an air conditioner including a positive temperature coefficient heater (PTC heater).

### BACKGROUND ART

Conventionally, an air conditioner including a PTC heater has been known (for example, Patent Literature 1). Fig. 8 is a diagram illustrating a relationship between a limited current and a heater current in the air conditioner according to Patent Literature 1. As illustrated in Fig. 8, in the air conditioner in Patent Literature 1, in the blower that blows air to the PTC heater, when "air volume: strong" until time t81 is set, a fan motor of the blower has a high rotation speed and a large air volume, and also the current of the PTC heater increases, until time t81. Therefore, in the air conditioner in Patent Literature 1, a limit value of an operating current for driving a compressor motor is set to a low value of Nh.

In the air conditioner in Patent Literature 1, when the setting is switched to "air volume: weak" after time t81, the rotation speed of the fan motor is low, the air volume is small, and the current of the PTC heater is also small. Therefore, in the air conditioner in Patent Literature 1, the limit value of the operating current for driving the compressor motor is set from Nh to Nl with a high setting between time t81 and time t82.

Next, in the air conditioner in Patent Literature 1, when the setting is switched to "air volume: strong" after time t84, the rotation speed of the fan motor is high, the air volume increases, and also the current of the PTC heater increases.

Therefore, in the air conditioner in Patent Literature 1, the limit value of the operating current for driving the compressor motor is set from Nl to Nh with a low setting between time t83 and time t84.

As a result, in the air conditioner in Patent Literature 1, the total current of the operating currents of the PTC heater and the compressor motor does not exceed a breaker capacitance.

Patent Literature 2 discloses a washing and drying machine provided with a control means for controlling the quantity of a power supply to the electric heater and controlling the quantity of the power supply not to exceed a preset upper limit of a heat loading current.

Patent Literature 3 provides an air conditioner including: a heater control section for carrying out duty control on a positive temperature coefficient (PTC) heater; and a current detecting section for detecting a current value of the PTC heater. The PTC heater starts to be driven at a predetermined temperature duty ratio. When the current value detected by the current detecting section takes a peak, a duty ratio increasing process of increasing the duty ratio of the PTC heater by a predetermined amount is repeated until the duty ratio reaches to 100%.

Patent Literature 4 provides a control device for air conditioner with compressor, multiple semiconductor heaters, and blower. The control device performs total-current detection, controls the energizing of the heaters in sequence so as to control the total current not to exceed the limit current value of the overload protection device.

### Patent Literature

PTL 1: Unexamined Japanese Patent Publication No. H3-84350
PTL 2: Japanese patent 4 255 858 B2
PTL 3: Canadian patent application 2 722 746
PTL 4: JPH04-120553 U

### SUMMARY OF THE INVENTION

An object of the present invention is to provide an air conditioner that continues operation of a PTC heater within a breaker capacitance while prioritizing operation of driving a compressor motor over operation of the PTC heater.

An air conditioner according to the present invention includes a heater unit, a converter, a first inverter, a second inverter, an input current detector, and a controller. The heater unit includes a plurality of PTC heaters that receives supply of AC power from an AC power supply, and a plurality of switching units that switches on and off of the supply of the AC power to each of the plurality of PTC heaters. The converter converts AC power of the AC power supply into DC power. The first inverter converts DC power from the converter into AC power and supplies the AC power to a compressor motor. The second inverter converts DC power from the converter into AC power and supplies the AC power to a fan motor that is a part of a blower that blows air to the plurality of PTC heaters. The input current detector detects a total input current of an input current to the converter and an input current to the heater unit. The controller controls operations of the first inverter, the second inverter, and the plurality of switching units. When a current value of the total input current detected by the input current detector exceeds a first limit value lower than a breaker capacitance, the controller performs control as follows. That is, the controller executes at least one of reducing a rotation speed of the fan motor, and reducing the number of the plurality of PTC heaters energized, in preference to reducing a rotation speed of the compressor motor. When the current value of the total input current detected by the input current detector is less than the first limit value, the controller performs control as follows. That is, the controller executes at least one of increasing the rotation speed of the compressor motor, increasing the rotation speed of the fan motor, and adding the number of the plurality of PTC heaters energized.

The air conditioner according to the present invention can continue operation of the PTC heater within the breaker capacitance while prioritizing operation of driving the compressor motor over operation of the PTC heater.

### BRIEF DESCRIPTION OF THE DRAWINGS

Fig. 1 is a schematic diagram illustrating a configuration of an air conditioner according to a first exemplary embodiment.
Fig. 2 is a schematic diagram illustrating a configuration of a heater unit according to the first exemplary embodiment.
Fig. 3 is a diagram illustrating control for reducing a total input current by adjusting a rotation speed of a fan motor according to the first exemplary embodiment.
Fig. 4 is a diagram illustrating control for reducing the total input current by adjusting the rotation speed of the fan motor and adjusting the number of PTC heaters energized according to the first exemplary embodiment.
Fig. 5 is a diagram illustrating control for reducing the total input current by adjusting the rotation speed of the fan motor, adjusting the number of PTC heaters energized, and adjusting the rotation speed of the compressor motor according to the first exemplary embodiment.
Fig. 6 is a diagram illustrating control for adjusting the rotation speed of the fan motor and adjusting the number of PTC heaters energized when the total input current rapidly increases according to the first exemplary embodiment.
Fig. 7 is a diagram illustrating a temporal change of a heater current when the PTC heater is energized according to the first exemplary embodiment.
Fig. 8 is a diagram illustrating a relationship between a limited current and a heater current in a conventional technology.

### DESCRIPTION OF EMBODIMENT

An air conditioner according to the present invention includes a heater unit, a converter, a first inverter, a second inverter, an input current detector, and a controller. The heater unit includes a plurality of PTC heaters that receives supply of AC power from an AC power supply, and a plurality of switching units that switches on and off of the supply of the AC power to each of the plurality of PTC heaters. The converter converts AC power of the AC power supply into DC power. The first inverter converts DC power from the converter into AC power and supplies the AC power to a compressor motor. The second inverter converts DC power from the converter into AC power and supplies the AC power to a fan motor that is a part of a blower that blows air to the plurality of PTC heaters. The input current detector detects a total input current of an input current to the converter and an input current to the heater unit. The controller controls operations of the first inverter, the second inverter, and the plurality of switching units. When a current value of the total input current detected by the input current detector exceeds a first limit value lower than a breaker capacitance, the controller performs control as follows. That is, the controller executes at least one of reducing a rotation speed of the fan motor, and reducing the number of the plurality of PTC heaters energized, in preference to reducing a rotation speed of the compressor motor. When the current value of the total input current detected by the input current detector is less than the first limit value, the controller performs control as follows. That is, the controller executes at least one of increasing the rotation speed of the compressor motor, increasing the rotation speed of the fan motor, and adding the number of the plurality of PTC heaters energized.

Furthermore, the controller may decrease the rotation speed of the fan motor when the current value of the total input current detected by the input current detector exceeds the first limit value. When the current value of the total input current detected by the input current detector exceeds the first limit value after the rotation speed of the fan motor reaches the predetermined lower limit rotation speed, the controller may reduce the number of the plurality of PTC heaters energized. When all energization to the plurality of PTC heaters is turned off by reducing the number of the plurality of PTC heaters energized, the controller may perform the following control. That is, the controller may stop driving of the fan motor, and, when the current value of the total input current detected by the input current detector still exceeds the first limit value, the controller may decrease the rotation speed of the compressor motor.

Furthermore, when the current value of the total input current detected by the input current detector exceeds a second limit value that is higher than the first limit value and lower than the breaker capacitance, the controller may stop driving of the fan motor and turn off all energization to the plurality of PTC heaters.

Furthermore, when the current value of the total input current detected by the input current detector is less than a release value set to be lower than the maximum current value of an inrush current of the plurality of PTC heaters than the first limit value or the second limit value, the controller may add the number of the plurality of PTC heaters energized.

Hereinafter, an exemplary embodiment will be described in detail with reference to the drawings. However, unnecessarily detailed description may be omitted. For example, detailed descriptions of already well-known matters or redundant descriptions of substantially the same configuration may be omitted.

Note that the accompanying drawings and the following description are only presented to help those skilled in the art fully understand the present invention, and are not intended to limit the subject matters described in the scope of claims.

### (First exemplary embodiment)

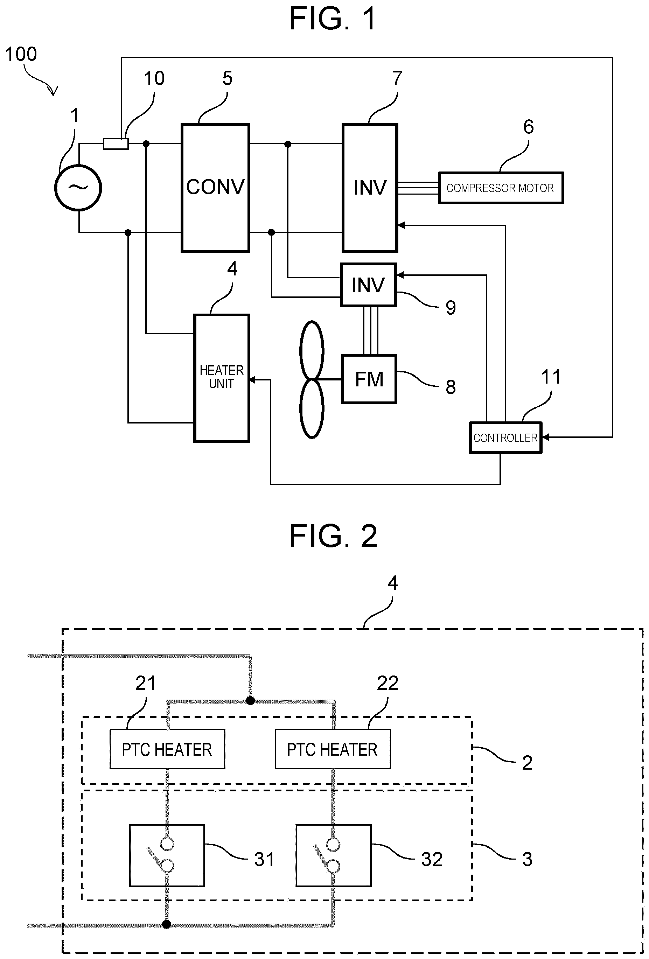

Hereinafter, air conditioner 100 according to a first exemplary embodiment as an example of an air conditioner in the present invention will be described with reference to Figs. 1 to 7.

### [1-1. Configuration]

Fig. 1 is a schematic diagram illustrating a configuration of air conditioner 100 according to a first exemplary embodiment, and Fig. 2 is a schematic diagram illustrating a configuration of heater unit 4 including a plurality of (two) PTC heaters 2.

Air conditioner 100 according to the first exemplary embodiment includes heater unit 4. Heater unit 4 includes a plurality of PTC heaters 2 that receives supply of AC power from AC power supply 1, and a plurality of switching units 3 that respectively switches on and off of the supply of AC power to the plurality of PTC heaters 2. The plurality of PTC heaters 2 (hereinafter, also simply referred to as "PTC heaters 2") includes first PTC heater 21 and second PTC heater 22, and the plurality of switching units 3 (hereinafter, also simply referred to as "switching units 3") includes first switching unit 31 and second switching unit 32 configured by a relay or the like. By turning off first switching unit 31, the supply of AC power to first PTC heater 21 is turned off, and by turning off second switching unit 32, the supply of AC power to second PTC heater 22 is turned off. When first switching unit 31 and second switching unit 32 are turned on, the number of PTC heaters 2 energized is two, and when first switching unit 31 or second switching unit 32 is turned off, the number of PTC heaters 2 energized is one. When first switching unit 31 and second switching unit 32 are turned off, the number of PTC heaters 2 energized is 0. Air conditioner 100 can reduce the number of PTC heaters 2 energized and reduce the current of PTC heaters 2 by turning off at least one of first switching unit 31 and second switching unit 32.

Furthermore, air conditioner 100 according to the first exemplary embodiment includes converter 5 and first inverter 7. Converter 5 includes a diode bridge, a semiconductor switch element, or the like, and converts AC power of AC power supply 1 into DC power. First inverter 7 includes a semiconductor switch element or the like, converts DC power from converter 5 into AC power, and supplies the AC power to compressor motor 6. Compressor motor 6 is a motor that drives a compressor of a heat pump device of air conditioner 100.

In addition, air conditioner 100 according to the first exemplary embodiment includes second inverter 9, input current detector 10, and controller 11. Second inverter 9 includes a semiconductor switch element or the like, converts DC power from converter 5 into AC power, and supplies the AC power to fan motor 8. Fan motor 8 is a part of a blower that blows air to first PTC heater 21 and second PTC heater 22, and drives a fan of the blower. Input current detector 10 includes a current sensor or the like, and detects the total input current of the input current to converter 5 and the input current to heater unit 4. Controller 11 includes a microcomputer or the like, and controls operations of first inverter 7, second inverter 9, and switching units 3 (first switching unit 31 and second switching unit 32). Note that a computer system such as a microcomputer includes a processor and a memory. The computer system functions as controller 11 by causing the processor to execute a program stored in the memory. In the example explained herein, the program executed by the processor is recorded in the memory of the computer system in advance, but may be provided in a manner recorded in a non-transitory recording medium, such as a memory card, or provided over a telecommunication line such as the Internet.

That is, controller 11 controls the operation of first inverter 7 to control the AC power supplied to compressor motor 6, and as a result, the rotation speed of compressor motor 6 is controlled. Furthermore, controller 11 controls the operation of second inverter 9 to control the AC power supplied to fan motor 8, and as a result, the rotation speed of fan motor 8 is controlled. Furthermore, controller 11 controls the operation of switching units 3 (first switching unit 31 and second switching unit 32) to switch on and off of the supply of AC power to respective one of first PTC heater 21 and second PTC heater 22. As a result, the number of PTC heaters 2 energized is controlled.

### [1-2. Operation]

Operations and effects of air conditioner 100 according to the first exemplary embodiment configured in the above manner will hereinafter be described. Note that, in the present exemplary embodiment, the current value of the total input current may be simply referred to as "total input current" in some cases.

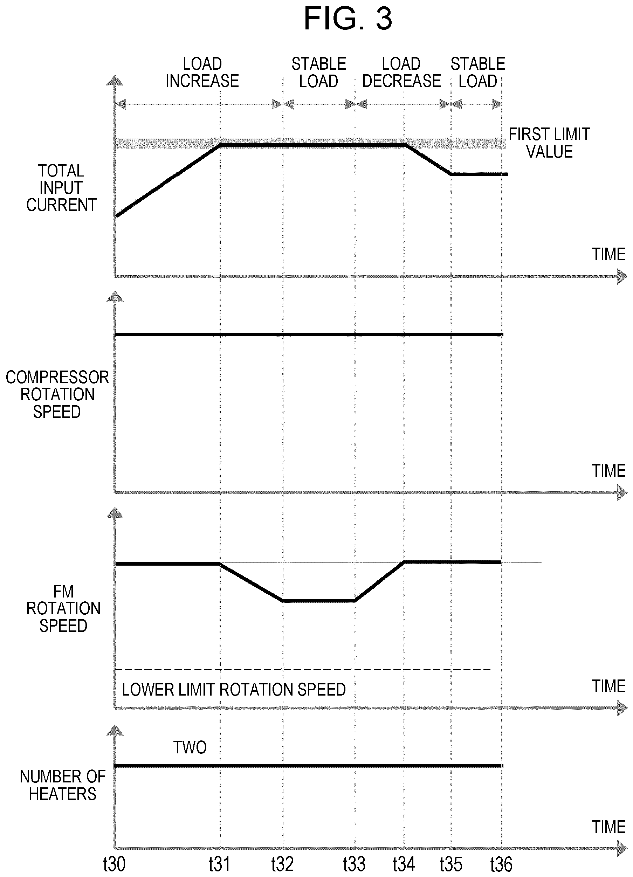

Figs. 3 to 6 are diagrams illustrating a relationship between the total input current of air conditioner 100, the compressor rotation speed, the fan motor rotation speed, and the number of PTC heaters energized in the first exemplary embodiment.

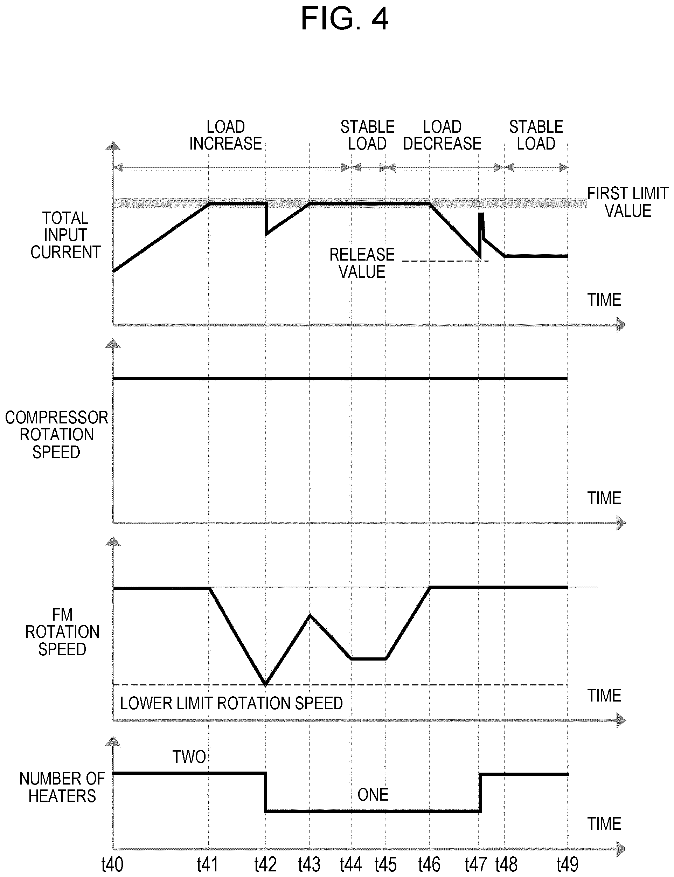

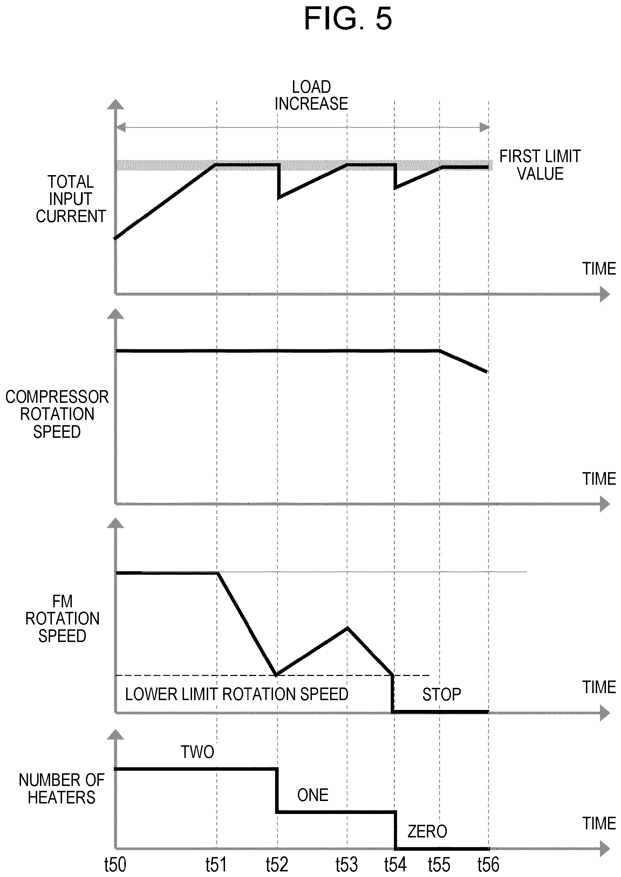

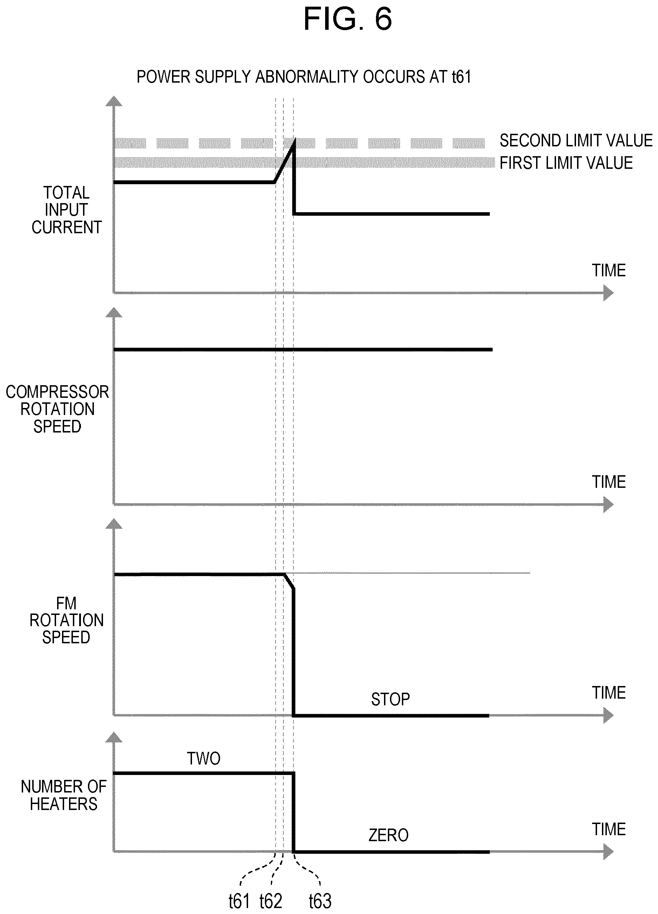

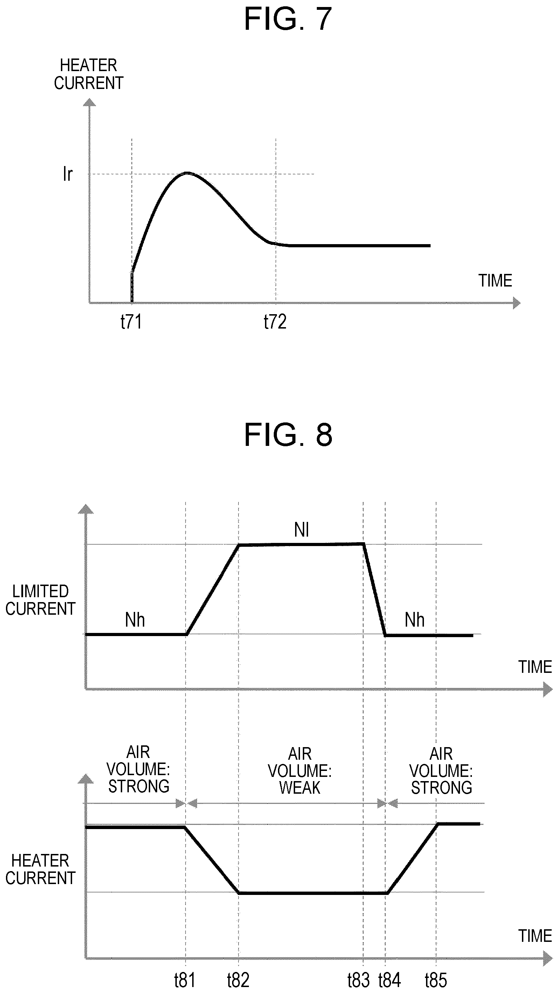

Incidentally, Fig. 3 is a diagram illustrating control for reducing the total input current by adjusting the rotation speed of the fan motor, and Fig. 4 is a diagram illustrating control for reducing the total input current by adjusting the rotation speed of the fan motor and adjusting the number of PTC heaters energized. Fig. 5 is a diagram illustrating control for reducing the total input current by adjusting the rotation speed of the fan motor, adjusting the number of PTC heaters energized, and adjusting the rotation speed of the compressor motor. Fig. 6 is a diagram illustrating control for adjusting the rotation speed of the fan motor and adjusting the number of PTC heaters energized when the total input current rapidly increases, and Fig. 7 is a diagram illustrating a temporal change in the current when the PTC heaters are energized.

First, current limit by adjusting the rotation speed of fan motor 8 will be described with reference to Fig. 3.

In Fig. 3, it is assumed that the load temporally changes as follows due to a temperature change outside or inside the room. That is, the load increases from time t30 to time t32, and the load is stable from time t32 to time t33. Furthermore, the load decreases from time t33 to time t35, and the load is stable from time t35 to time t36. Fig. 3 illustrates, from the top, temporal changes of the total input current detected by input current detector 10, the rotation speed of compressor motor 6, the rotation speed of fan motor 8, and the number of PTC heaters 2 energized.

From time t30 to time t31, the total input current increases as the load increases, but since the total input current is less than the first limit value, controller 11 does not limit the rotation speed of compressor motor 6, the rotation speed of fan motor 8, and the number of PTC heaters 2 energized. Here, the first limit value is a threshold set in advance to prevent the current value of the total input current from exceeding the breaker capacitance. That is, the first limit value is a value lower than the breaker capacitance.

When the total input current reaches and exceeds the first limit value at time t31 (that is, becomes equal to or larger than the first limit value), controller 11 starts to limit the rotation speed of fan motor 8. That is, controller 11 decreases the current of heater unit 4 by decreasing the rotation speed of fan motor 8, increasing the temperature of PTC heaters 2, and increasing the resistance value of PTC heaters 2.

Then, when the total input current becomes less than the first limit value, controller 11 increases the current of heater unit 4 by increasing the rotation speed of fan motor 8, lowering the temperature of PTC heaters 2, and decreasing the resistance value of PTC heaters 2.

By adjusting the rotation speed of fan motor 8 in this manner, controller 11 gradually decreases the rotation speed of fan motor 8 with an increase in load, and limits the total input current by the first limit value while continuing the output of heater unit 4 as much as possible.

When the load becomes stable from time t32 to time t33, controller 11 stably drives fan motor 8 at the rotation speed at which the total input current can be limited by the first limit value.

When the load decreases from time t33 to time t35, controller 11 gradually increases the rotation speed of fan motor 8 along with the decrease of the load, and limits the total input current with the first limit value while increasing the output of heater unit 4 as much as possible.

When the rotation speed of fan motor 8 returns to the rotation speed before the limit at time t34, the total input current decreases from time t34 to time t35 as the load decreases. When the load becomes stable from time t35 to time t36, controller 11 does not limit the rotation speed of compressor motor 6, the rotation speed of fan motor 8, and the number of PTC heaters 2 energized, and the total input current becomes stable below the first limit value.

When the load increase width is small as described above, controller 11 executes the output limit of heater unit 4 by adjusting the rotation speed of fan motor 8 that is a part of the blower that blows air to PTC heaters 2, without limiting the rotation speed of compressor motor 6. As a result, controller 11 can limit the total input current within the first limit value. That is, air conditioner 100 according to the first exemplary embodiment can continue the operation of PTC heaters 2 within the breaker capacitance while prioritizing the operation of driving compressor motor 6 by reducing the rotation speed of fan motor 8.

Next, current limit by adjusting the rotation speed of fan motor 8 and adjusting the number of PTC heaters 2 energized will be described with reference to Fig. 4.

In Fig. 4, it is assumed that the load temporally changes as follows due to a temperature change outside or inside the room. That is, the load increases from time t40 to time t44, and the load is stable from time t44 to time t45. Furthermore, the load decreases from time t45 to time t48, and the load is stable from time t48 to time t49. Fig. 4 illustrates, from the top, temporal changes of the total input current detected by input current detector 10, the rotation speed of compressor motor 6, the rotation speed of fan motor 8, and the number of PTC heaters 2 energized.

From time t40 to time t41, the total input current increases as the load increases, but since the total input current is less than the first limit value, controller 11 does not limit the rotation speed of compressor motor 6, the rotation speed of fan motor 8, and the number of PTC heaters 2 energized.

When the total input current reaches and exceeds the first limit value at time t41, controller 11 starts to limit the rotation speed of fan motor 8. That is, controller 11 decreases the current of heater unit 4 by decreasing the rotation speed of fan motor 8, increasing the temperature of PTC heaters 2, and increasing the resistance value of PTC heaters 2.

Then, when the total input current becomes less than the first limit value, controller 11 increases the current of heater unit 4 by increasing the rotation speed of fan motor 8, lowering the temperature of PTC heaters 2, and decreasing the resistance value of PTC heaters 2.

By adjusting the rotation speed of fan motor 8 in this manner, controller 11 gradually decreases the rotation speed of fan motor 8 with an increase in load, and limits the total input current by the first limit value while continuing the output of heater unit 4 as much as possible.

When the rotation speed of fan motor 8 reaches the preset lower limit rotation speed at time t42, the current of PTC heaters 2 cannot be reduced only by adjusting the rotation speed of fan motor 8. Here, the lower limit rotation speed is a lower limit value of the rotation speed at which fan motor 8 can be stably rotated.

Therefore, when the total input current exceeds the first limit value, controller 11 turns off first switching unit 31 or second switching unit 32 constituting heater unit 4 to reduce the number of PTC heaters 2 energized by one and reduce the current of PTC heaters 2.

When controller 11 reduces the number of PTC heaters 2 energized at time t42, the total input current decreases stepwise, and therefore the total input current becomes less than the first limit value.

Therefore, controller 11 increases the rotation speed of fan motor 8 to increase the output of heater unit 4 within the first limit value.

When the total input current again reaches and exceeds the first limit value at time t43, controller 11 gradually decreases the rotation speed of fan motor 8 as the load increases from time t43 to time t44. In this manner, controller 11 limits the total input current by the first limit value while continuing the output of heater unit 4 as much as possible.

When the load becomes stable from time t44 to time t45, controller 11 stably drives fan motor 8 at the rotation speed at which the total input current can be limited by the first limit value.

When the load decreases from time t45 to time t48, controller 11 gradually increases the rotation speed of fan motor 8 along with the decrease of the load, and limits the total input current with the first limit value while increasing the output of heater unit 4 as much as possible.

When the rotation speed of fan motor 8 returns to the rotation speed before the limit at time t46, the total input current decreases from time t46 as the load decreases.

When the total input current becomes less than the release value at time t47, PTC heaters 2 are added, and the number limited by controller 11 of PTC heaters 2 energized is returned to the number before the limit.

Here, the release value will be described with reference to Fig. 7. Fig. 7 is a diagram illustrating a temporal change of a heater current when PTC heaters 2 are energized. As illustrated in Fig. 7, the release value is set to satisfy "(first limit valuerelease value) > Ir", where Ir is the maximum current value of the inrush current after the voltage is applied to PTC heaters 2 at time t71. That is, the release value is set to be lower than maximum current value Ir of the inrush current of PTC heaters 2 than the first limit value.

As a result, controller 11 prevents the total input current from exceeding the first limit value by adding PTC heaters 2.

After the inrush current flows due to the addition of PTC heaters 2 (for example, after time t72 in Fig. 7), the total input current decreases as the load decreases.

When the load becomes stable from time t48 to time t49, controller 11 does not limit the rotation speed of compressor motor 6, the rotation speed of fan motor 8, and the number of PTC heaters 2 energized, and the total input current becomes stable below the first limit value.

Even when the load increase width is large to some extent as described above, controller 11 executes the output limit of heater unit 4 by adjusting the rotation speed of fan motor 8 that is a part of the blower that blows air to PTC heaters 2 and adjusting the number of PTC heaters 2 energized, without limiting the rotation speed of compressor motor 6. As a result, controller 11 can limit the total input current within the first limit value. That is, air conditioner 100 according to the first exemplary embodiment can continue the operation of PTC heaters 2 within the breaker capacitance while prioritizing the operation of driving compressor motor 6 by reducing the rotation speed of fan motor 8 and reducing the number of PTC heaters 2 energized.

Next, current limit by adjusting the rotation speed of fan motor 8, adjusting the number of PTC heaters 2 energized, and adjusting the rotation speed of compressor motor 6 will be described with reference to Fig. 5.

In Fig. 5, it is assumed that the load is in an increasing state from time t50 to time t56 due to a temperature change outside or inside the room. Fig. 5 illustrates, from the top, temporal changes of the total input current detected by input current detector 10, the rotation speed of compressor motor 6, the rotation speed of fan motor 8, and the number of PTC heaters 2 energized.

From time t50 to time t51, the total input current increases as the load increases, but since the total input current is less than the first limit value, controller 11 does not limit the rotation speed of compressor motor 6, the rotation speed of fan motor 8, and the number of PTC heaters 2 energized.

When the total input current reaches and exceeds the first limit value at time t51, controller 11 starts to limit the rotation speed of fan motor 8. That is, controller 11 decreases the current of heater unit 4 by decreasing the rotation speed of fan motor 8, increasing the temperature of PTC heaters 2, and increasing the resistance value of PTC heaters 2.

Then, when the total input current becomes less than the first limit value, controller 11 increases the current of heater unit 4 by increasing the rotation speed of fan motor 8, lowering the temperature of PTC heaters 2, and decreasing the resistance value of PTC heaters 2.

By adjusting the rotation speed of fan motor 8 in this manner, controller 11 gradually decreases the rotation speed of fan motor 8 with an increase in load, and limits the total input current by the first limit value while continuing the output of heater unit 4 as much as possible.

When the rotation speed of fan motor 8 reaches the preset lower limit rotation speed at time t52, the current of PTC heaters 2 cannot be reduced only by adjusting the rotation speed of fan motor 8.

Therefore, when the total input current exceeds the first limit value, controller 11 turns off first switching unit 31 or second switching unit 32 constituting heater unit 4 to reduce the number of PTC heaters 2 energized by one and reduces the current of PTC heaters 2.

When controller 11 reduces the number of PTC heaters 2 energized at time t52, the total input current decreases stepwise, and therefore the total input current becomes less than the first limit value.

Therefore, controller 11 increases the rotation speed of fan motor 8 to increase the output of heater unit 4 within the first limit value.

When the total input current again reaches and exceeds the first limit value at time t53, controller 11 gradually decreases the rotation speed of fan motor 8 as the load increases from time t53 to time t54. In this manner, controller 11 limits the total input current by the first limit value while continuing the output of heater unit 4 as much as possible.

When the rotation speed of fan motor 8 reaches the preset lower limit rotation speed at time t54, the current of PTC heaters 2 cannot be reduced only by adjusting the rotation speed of fan motor 8.

Therefore, when the total input current exceeds the first limit value, controller 11 turns off first switching unit 31 or second switching unit 32 constituting heater unit 4, first switching unit 31 or second switching unit 32 being energized. As a result, controller 11 reduces the number of PTC heaters 2 energized to 0, reduces the current of heater unit 4 to 0, and stops fan motor 8.

When heater unit 4 and fan motor 8 are stopped at time t54, the total input current decreases stepwise, and thereafter, the total input current increases as the load increases.

When the total input current reaches and exceeds the first limit value at time t55, controller 11 starts to limit the rotation speed of compressor motor 6.

When the total input current exceeds the first limit value, controller 11 decreases the rotation speed of compressor motor 6 to decrease the current flowing to converter 5. When the total input current becomes less than the first limit value, controller 11 increases the rotation speed of compressor motor 6 to increase the current flowing to converter 5.

By adjusting the rotation speed of compressor motor 6 as described above, controller 11 gradually decreases the rotation speed of compressor motor 6 as the load increases, and limits the total input current by the first limit value while maintaining the output of compressor motor 6 as much as possible.

As described above, in the example of Fig. 5, the increase width of the load is large, and the rotation speed of compressor motor 6 is also limited. Even in this case, controller 11 preferentially executes the output limit of heater unit 4 by adjusting the rotation speed of fan motor 8 and by adjusting the number of PTC heaters 2 energized over the limit by adjusting the rotation speed of compressor motor 6, fan motor 8 being a part of the blower that blows air to PTC heaters 2. As a result, controller 11 can limit the total input current within the first limit value without stopping the operation of the heat pump device that drives the compressor by compressor motor 6 due to the influence of the energization to heater unit 4.

Although Fig. 5 does not illustrate the temporal change of the load after time t56, in a case where the load decreases after time t56, for example, controller 11 may perform control as follows. That is, when the total input current becomes less than the first limit value, controller 11 first returns the rotation speed of compressor motor 6 to the rotation speed before the limit, preferentially to other limits. Thereafter, when the total input current is less than the first limit value, controller 11 returns the rotation speed of fan motor 8 to the rotation speed before the limit. As described with reference to Fig. 4, the number of PTC heaters 2 energized may be returned to the number before the limit when the total input current is less than the release value.

Next, current limit by adjusting the rotation speed of fan motor 8 and adjusting the number of PTC heaters 2 energized when the total input current rapidly increases will be described with reference to Fig. 6.

In Fig. 6, it is assumed that power supply abnormality occurs at time t61 during the stable operation of each of compressor motor 6, fan motor 8, and heater unit 4, and a power supply voltage higher than the rated voltage is instantaneously applied. Fig. 6 illustrates a state in which the total input current detected by input current detector 10 rapidly increases and greatly exceeds the first limit value.

Here, the second limit value is set to a value larger than the first limit value and smaller than the breaker capacitance.

When the total input current exceeds the first limit value at time t62, controller 11 starts to limit the rotation speed of fan motor 8.

When the total input current further increases and reaches the second limit value at time t63, controller 11 immediately stops heater unit 4 and fan motor 8. As a result, controller 11 limits the total input current to less than the first and second limit values.

In the current limit of PTC heaters 2 by adjusting the rotation speed of fan motor 8 that is a part of the blower that blows air to PTC heaters 2, since the resistance value is adjusted by changing the temperature of PTC heaters 2 to adjust the current, it is not possible to limit the current with good followability with respect to a rapid current increase.

By providing the second limit value for immediately stopping fan motor 8 and heater unit 4 even when the increase width of the load is large and sudden, controller 11 can minimize the excess time of the first limit value.

Note that although Fig. 6 does not illustrate the control after the total input current becomes less than the first limit value, controller 11 may perform control as follows similarly to the control described with reference to Fig. 4. That is, when the total input current is less than the first limit value, controller 11 returns the rotation speed of fan motor 8 being stopped to the rotation speed before the limit. Then, when the total input current is less than the release value, the number of PTC heaters 2 energized is returned to the number before the limit.

### [1-3. Effects, etc.]

As described above, in air conditioner 100 in the present exemplary embodiment, controller 11 executes control as follows to limit the total input current within the first limit value. That is, controller 11 preferentially executes adjustment of the rotation speed of fan motor 8 and adjustment of the number of PTC heaters 2 energized in heater unit 4 over the limit by adjusting the rotation speed of compressor motor 6, fan motor 8 being a part of the blower that blows air to PTC heaters 2. As a result, air conditioner 100 does not stop the operation of the heat pump device that drives the compressor by compressor motor 6, that is, air conditioner 100, due to the influence of the energization to heater unit 4, and therefore the operation by heater unit 4 can be continued to the maximum.

That is, in order that the total input current is limited within the first limit value, controller 11 preferentially executes adjustment of the rotation speed of fan motor 8 and adjustment of the number of PTC heaters 2 energized in heater unit 4 over adjustment of the rotation speed of compressor motor 6, fan motor 8 being a part of the blower that blows air to PTC heaters 2. As a result, even when a load change occurs, air conditioner 100 does not stop the operation of the heat pump device that drives the compressor by compressor motor 6, that is, air conditioner 100, while limiting the total input current within the limit value. Therefore, air conditioner 100 according to the first exemplary embodiment can continue the output of heater unit 4 to the maximum.

### (Other exemplary embodiments)

The first exemplary embodiment has been described above, as some examples of the technology according to the present invention. However, the technology according to the present invention is not limited thereto. Therefore, other exemplary embodiments will be described below.

Air conditioner 100 according to the first exemplary embodiment has been described as including two PTC heaters 2 (first PTC heater 21 and second PTC heater 22) as an example of the plurality of PTC heaters of the present invention. However, the plurality of PTC heaters of the present invention does not need to be two, and may be three or more. In the air conditioner according to a first modification including three or more PTC heaters, the number of the plurality of PTC heaters of the first modification may be equal to the number of the plurality of switching units of the first modification to make the plurality of PTC heaters of the first modification correspond one-to-one to the plurality of switching units of the first modification. Alternatively, in the air conditioner according to a second modification including three or more PTC heaters, the number of the plurality of PTC heaters of the second modification may be larger than the number of the plurality of switching units of the second modification. In this case, one switching unit of the second modification switches on and off of the supply of the AC power to the two or more PTC heaters of the second modification.

In the first exemplary embodiment, an example has been described in which when the total input current exceeds the first limit value, controller 11 reduces the rotation speed of fan motor 8 before reducing the number of PTC heaters 2 energized. However, the controller of the present invention may execute at least one of reducing the rotation speed of the fan motor of the present invention and reducing the number of the plurality of PTC heaters energized in the present invention. That is, the controller of the present invention may first reduce the number of the plurality of PTC heaters energized. However, from the viewpoint of continuing the operation of the PTC heaters of the present invention within the breaker capacitance, it is better to preferentially reduce the rotation speed of fan motor 8 as described in the first exemplary embodiment.

In the first exemplary embodiment, it has been described that the release value is set to satisfy "(first limit value - release value) > maximum current value Ir of inrush current" on the basis of the first limit value. However, the release value of the present invention may be based on the second limit value. That is, the release value may be set to satisfy "(second limit value - release value) > maximum current value Ir of inrush current".

### INDUSTRIAL APPLICABILITY

The present invention can be applied to an air conditioner including a PTC heater, for example, an air conditioner for home use or business use including a humidifier and a dehumidifier.

### REFERENCE MARKS IN THE DRAWINGS

- 1: AC power supply
- 2: PTC heater
- 3: switching unit
- 4: heater unit
- 5: converter
- 6: compressor motor
- 7: first inverter
- 8: fan motor
- 9: second inverter
- 10: input current detector
- 11: controller
- 21: first PTC heater
- 22: second PTC heater
- 31: first switching unit
- 32: second switching unit
- 100: air conditioner

## Claims

1. An air conditioner (100) comprising:
a heater unit (4) including
a plurality of PTC heaters (2, 21, 22) each of which receives supply of AC power from an AC power supply (1), and
a plurality of switching units (3, 31, 32) each of which switches on and off of the supply of the AC power to a corresponding one of the plurality of PTC heaters (2);
a converter (5) that converts the AC power of the AC power supply (1) into DC power;
a first inverter (7) that converts the DC power from the converter (5) into AC power and supplies the AC power to a compressor motor (6);
a second inverter (9) that converts the DC power from the converter (5) into AC power and supplies the AC power to a fan motor (8) that is a part of a blower that blows air to the plurality of PTC heaters (2, 21, 22);
an input current detector (10) that detects a total input current of an input current to the converter (5) and an input current to the heater unit (4); and
a controller (11) that controls operations of the first inverter (7), the second inverter (9), and the plurality of switching units (3, 31, 32),
wherein, when a current value of the total input current detected by the input current detector (10) exceeds a first limit value lower than a breaker capacitance, the controller (11) executes at least one of reducing a rotation speed of the fan motor (8), and reducing a number of the plurality of PTC heaters (2, 21, 22) energized, in preference to reducing a rotation speed of the compressor motor (6), and,
when the current value of the total input current detected by the input current detector (10) is less than the first limit value, the controller (11) executes at least one of increasing the rotation speed of the compressor motor (6), increasing the rotation speed of the fan motor (8), and adding the number of the plurality of PTC (2, 21, 22) heaters energized.

2. The air conditioner (100) according to claim 1,
wherein the controller (11) reduces the rotation speed of the fan motor (8) when the current value of the total input current detected by the input current detector (10) exceeds the first limit value, reduces the number of the plurality of PTC heaters (2, 21, 22) energized when the current value of the total input current detected by the input current detector (10) exceeds the first limit value after the rotation speed of the fan motor (8) reaches a predetermined lower limit rotation speed, stops driving of the fan motor (8) when all energization to the plurality of PTC heaters (2, 21, 22) are turned off by reducing the number of the plurality of PTC heaters (2, 21, 22) energized, and reduces the rotation speed of the compressor motor (6) when the current value of the total input current detected by the input current detector (10) still exceeds the first limit value.

3. The air conditioner (100) according to claim 1 or claim 2,
wherein, when the current value of the total input current detected by the input current detector (10) exceeds a second limit value that is higher than the first limit value and lower than the breaker capacitance, the controller (11) stops the driving of the fan motor (8) and turns off the all energization to the plurality of PTC heaters (2, 21, 22).

4. The air conditioner (100) according to claim 3,
wherein, when the current value of the total input current detected by the input current detector (10) is less than a release value set to be lower than a maximum current value of an inrush current of the plurality of PTC heaters (2, 21, 22) than the first limit value or the second limit value, the controller (11) adds the number of the plurality of PTC heaters (2, 21, 22) energized.

## Patentansprüche

1. Klimaanlage (100), umfassend:
eine Heizeinheit (4), mit
mehreren PTC-Heizeinrichtungen (2, 21, 22), von denen jede Wechselstrom aus einer Wechselstromversorgung (1) empfängt, und
mehreren Schalteinheiten (3, 31, 32), von denen jede die Zufuhr des Wechselstroms zu einer entsprechenden der mehreren PTC-Heizeinrichtungen (2) ein- und ausschaltet;
einen Wandler (5), der den Wechselstrom der Wechselstromversorgung (1) in Gleichstrom wandelt;
einen ersten Wechselrichter (7), der den Gleichstrom aus dem Wandler (5) in Wechselstrom wandelt und den Wechselstrom einem Kompressormotor (6) zuführt;
einen zweiten Wechselrichter (9), der den Gleichstrom aus dem Wandler (5) in Wechselstrom wandelt und den Wechselstrom einem Lüftermotor (8) zuführt, der Teil eines Gebläses ist, das Luft zu den mehreren PTC-Heizeinrichtungen (2, 21, 22) bläst;
einen Eingangsstromdetektor (10), der einen Gesamt-Eingangsstrom aus einem Eingangsstrom zum Wandler (5) und einem Eingangsstrom zur Heizeinheit (4) erfasst; und
eine Steuereinrichtung (11), die den Betrieb des ersten Wechselrichters (7), des zweiten Wechselrichters (9) und der mehreren Schalteinheiten (3, 31, 32) steuert,
wobei dann, wenn ein von dem Eingangsstromdetektor (10) erfasster Stromwert des Gesamt-Eingangsstroms einen ersten Grenzwert überschreitet, der unterhalb einer Trennschalterbelastbarkeit liegt, die Steuereinrichtung (11) wenigstens eine der folgenden Maßnahmen ausführt: Reduzieren einer Drehzahl des Lüftermotors (8), und Reduzieren einer Anzahl der mehreren PTC-Heizeinrichtungen (2, 21, 22), denen Strom zugeführt wird, vorrangig gegenüber einer Reduzierung einer Drehzahl des Kompressormotors (6), und
wenn der von dem Eingangsstromdetektor (10) erfasste Stromwert des Gesamt-Eingangsstroms kleiner als der erste Grenzwert ist, die Steuereinrichtung (11) wenigstens eine der folgenden Maßnahmen ausführt: Erhöhen der Drehzahl des Kompressormotors (6), Erhöhen der Drehzahl des Lüftermotors (8), und Erhöhen der Anzahl der mehreren PTC-Heizeinrichtungen (2, 21, 22), denen Strom zugeführt wird.

2. Klimaanlage (100) nach Anspruch 1,
wobei die Steuereinrichtung (11) die Drehzahl des Lüftermotors (8) reduziert, wenn der von dem Eingangsstromdetektor (10) erfasste Stromwert des Gesamt-Eingangsstroms den ersten Grenzwert überschreitet, die Anzahl der mehreren PTC-Heizeinrichtungen (2, 21, 22), die mit Strom versorgt werden, reduziert, wenn der von dem Eingangsstromdetektor (10) erfasste Stromwert des Gesamt-Eingangsstroms den ersten Grenzwert überschreitet, nachdem die Drehzahl des Lüftermotors (8) eine vorbestimmte untere Drehzahlgrenze erreicht hat, den Antrieb des Lüftermotors (8) stoppt, wenn die gesamte Stromversorgung der mehreren PTC-Heizeinrichtungen (2, 21, 22) durch Reduzierung der Anzahl der mit Strom versorgten PTC-Heizeinrichtungen (2, 21, 22) abgeschaltet ist, und die Drehzahl des Kompressormotors (6) reduziert, wenn der von dem Eingangsstromdetektor (10) erfasste Stromwert des Gesamt-Eingangsstroms weiterhin den ersten Grenzwert überschreitet.

3. Klimaanlage (100) nach Anspruch 1 oder Anspruch 2,
wobei dann, wenn der von dem Eingangsstromdetektor (10) erfasste Stromwert des Gesamt-Eingangsstroms einen zweiten Grenzwert überschreitet, der höher als der erste Grenzwert und niedriger als die Trennschalterbelastbarkeit ist, die Steuereinrichtung (11) den Antrieb des Lüftermotors (8) stoppt und die gesamte Stromversorgung der mehreren PTC-Heizeinrichtungen (2, 21, 22) abschaltet.

4. Klimaanlage (100) nach Anspruch 3,
wobei dann, wenn der von dem Eingangsstromdetektor (10) erfasste Stromwert des Gesamt-Eingangsstroms kleiner ist als ein Freigabewert, der niedriger gesetzt ist als ein maximaler Stromwert eines Einschaltstroms der mehreren PTC-Heizeinrichtungen (2, 21, 22) als der erste Grenzwert oder der zweite Grenzwert, die Steuereinrichtung (11) die Anzahl der mit Strom versorgten PTC-Heizeinrichtungen (2, 21, 22) erhöht.

## Revendications

1. Climatiseur (100) comprenant :
une unité de chauffage (4) comportant
une pluralité d'éléments chauffants à CTP (2, 21, 22) dont chacun reçoit une alimentation en courant alternatif provenant d'une alimentation en courant alternatif (1) et
une pluralité d'unités de commutation (3, 31, 32) dont chacune met sous tension et hors tension l'alimentation en courant alternatif vers un élément chauffant correspondant de la pluralité d'éléments chauffants à CTP (2) ;
un convertisseur (5) qui convertit le courant alternatif de l'alimentation en courant alternatif (1) en courant continu ;
un premier onduleur (7) qui convertit le courant continu provenant du convertisseur (5) en courant alternatif et qui fournit le courant alternatif à un moteur de compresseur (6) ;
un second onduleur (9) qui convertit le courant continu provenant du convertisseur (5) en courant alternatif et qui fournit le courant alternatif à un moteur de ventilateur (8) qui fait partie d'une soufflante qui souffle de l'air vers la pluralité d'éléments chauffants à CTP (2, 21, 22) ;
un détecteur (10) de courant d'entrée qui détecte un courant d'entrée total d'un courant d'entrée vers le convertisseur (5) et d'un courant d'entrée vers l'unité de chauffage (4) ; et
un dispositif de commande (11) qui commande des opérations du premier onduleur (7), du second onduleur (9) et de la pluralité d'unités de commutation (3, 31, 32),
dans lequel, lorsqu'une valeur de courant du courant d'entrée total détecté par le détecteur (10) de courant d'entrée est supérieure à une première valeur limite plus basse qu'une capacité de disjoncteur, le dispositif de commande (11) exécute au moins une commande parmi la réduction d'une vitesse de rotation du moteur de ventilateur (8) et la réduction d'un nombre d'éléments excités de la pluralité d'éléments chauffants à CTP (2, 21, 22) excités, de préférence à une réduction d'une vitesse de rotation du moteur de compresseur (6) et,
lorsque la valeur de courant du courant d'entrée total détecté par le détecteur (10) de courant d'entrée est inférieure à la première valeur limite, le dispositif de commande (11) exécute au moins une commande parmi l'augmentation de la vitesse de rotation du moteur de compresseur (6), l'augmentation de la vitesse de rotation du moteur de ventilateur (8) et l'ajout du nombre d'éléments excités de la pluralité d'éléments chauffants à CTP (2, 21, 22) excités.

2. Climatiseur (100) selon la revendication 1,
dans lequel le dispositif de commande (11) réduit la vitesse de rotation du moteur de ventilateur (8) lorsque la valeur de courant du courant d'entrée total détecté par le détecteur (10) de courant d'entrée est supérieure à la première valeur limite, réduit le nombre d'éléments excités de la pluralité d'éléments chauffants à CTP (2, 21, 22) excités lorsque la valeur de courant du courant d'entrée total détecté par le détecteur (10) de courant d'entrée est supérieure à la première valeur limite après que la vitesse de rotation du moteur de ventilateur (8) atteint une vitesse de rotation limite basse prédéterminée, arrête l'entraînement du moteur de ventilateur (8) lorsque toute l'excitation vers la pluralité d'éléments chauffants à CTP (2, 21, 22) est désactivée par la réduction du nombre d'éléments excités de la pluralité d'éléments chauffants à CTP (2, 21, 22) excités et réduit la vitesse de rotation du moteur de compresseur (6) lorsque la valeur de courant du courant d'entrée total détecté par le détecteur (10) de courant d'entrée est toujours supérieure à la première valeur limite.

3. Climatiseur (100) selon la revendication 1 ou la revendication 2,
dans lequel, lorsque la valeur de courant du courant d'entrée total détecté par le détecteur (10) de courant d'entrée est supérieure à une seconde valeur limite qui est plus élevée que la première valeur limite et plus basse que la capacité de disjoncteur, le dispositif de commande (11) arrête l'entraînement du moteur de ventilateur (8) et désactive la totalité de l'excitation vers la pluralité d'éléments chauffants à CTP (2, 21, 22).

4. Climatiseur (100) selon la revendication 3,
dans lequel, lorsque la valeur de courant du courant d'entrée total détecté par le détecteur (10) de courant d'entrée est inférieure à une valeur de libération réglée pour être plus basse qu'une valeur de courant maximale d'un courant d'appel de la pluralité d'éléments chauffants à CTP (2, 21, 22) que la première valeur limite ou la seconde valeur limite, le dispositif de commande (11) ajoute le nombre d'éléments excités de la pluralité d'éléments chauffants CTP (2, 21, 22) excités.
